# EUROPÄISCHE PATENTSCHRIFT

(11) **EP 1 218 078 B1**
(45) Veröffentlichungstag und Bekanntmachung des Hinweises auf die Patenterteilung: **28.01.2004**
(21) Anmeldenummer: 00958043.2
(22) Anmeldetag: 08.09.2000
(51) Int. Cl.: B01D 11/00

(54) **VERFAHREN ZUM GEWINNEN VON STOFFEN MITTELS EINER SCHNECKENPRESSE**
METHOD FOR OBTAINING MATERIALS USING A WORM EXTRUDER
PROCEDE PERMETTANT D'EXTRAIRE DES MATIERES A L'AIDE D'UNE EXTRUDEUSE

(30) Priorität: 09.09.1999 AT 155199; 11.11.1999 AT 190599
(43) Veröffentlichungstag der Anmeldung: 03.07.2002
(73) Patentinhaber: Sucher & Holzer Bauplanungs- und Handelsgesellschaft mbh, 8010 Graz (AT)
(72) Erfinder: FOIDL, Nikolaus, A-8042 Graz (AT)
(74) Vertreter: Gaggini, Carlo, Dipl.Ing.
(86) Internationale Anmeldenummer: PCT/AT2000/000243
(87) Internationale Veröffentlichungsnummer: WO 2001/017642

(56) Entgegenhaltungen:
- US-A- 4 289 067
- US-A- 5 183 578
- US-A- 5 341 730

## Beschreibung

Die Erfindung betrifft ein Verfahren zum Gewinnen von extrahierbaren Stoffen und/oder Reaktionsprodukten aus Rohstoffen durch Pressen und Extrahieren und/oder Umsetzen in Gegenwart eines oder mehrerer flüssiger oder gasförmiger Extraktionsmittel und/oder Reaktanten, wobei der Rohstoff mittels einer Schneckenpresse entlang derselben abwechselnd in Verdichtungszonen verdichtet und in Entspannungszonen entspannt wird und ein Extraktionsmittel und/oder Reaktant dem Rohstoff in den Entspannungszonen zugeführt wird, und wobei entlang der Schneckenpresse eine Abseihung der extrahierten Stoffe und/oder Reaktionsprodukte durchgeführt wird, sowie eine Schneckenpresse zur Durchführung des Verfahrens.

Für die Zwecke der vorliegenden Beschreibung und Patentansprüche soll der Begriff "Rohstoff" anorganische oder organische Stoffe, welche Öle, Zucker, Proteine, Terpene, Aromaten oder Duftstoffe enthalten, flüssige und feste Kohlenwasserstoffe, Kunststoffe, Substrate für enzymatisch katalysierte Reaktionen, nasse Feststoffe sowie Mineralien und Erden umfassen.

Aus der DE-A - 30 16 877 ist ein Verfahren zur kontinuierlichen Fettabtrennung aus organischen Rohstoffen bekannt, wobei der Rohstoff zunächst zerkleinert, gegebenenfalls getrocknet, anschließend mit einem Fettlösungsmittel angemaischt und danach einer Schneckenpresse zugeführt wird.

Die GB-A - 1 340 484 betrifft ein Verfahren zur Gewinnung von Öl durch Verpressen in Gegenwart eines Extraktionsmittels. Gemäß diesem Verfahren wird der ölhaltigen Palmfrucht am Eingang der Presse Lösungsmittel unter Normaldruck zugeführt.

Die DE-C - 665 873 beschreibt ein Verfahren zum Gewinnen von ölhältigen Stoffen, gemäß welchem während des Verpressens Extraktionsmittel zugeführt wird.

Gemäß der GB-A - 0 918 438 wird zu verpressendes Gut in die erste von drei zueinander rechtwinkelig angeordneten Pressen eingebracht und horizontal zur zweiten Presse bewegt, in der zweiten Presse das Preßgut vertikal nach unten transportiert, wobei Öl aus dem Preßgut gepreßt wird, und in der dritten flüssigkeits- und gasdicht ausgeführten Presse das Preßgut unter Einspritzen eines Lösungsmittels für das Öl während des Pressens weiter verpreßt.

Bei diesen bekannten Verfahren sind die Ausbeuten an gewonnenem Stoff relativ gering, da aufgrund des unter Normaldruck zugeführten Extraktionsmittels keine gute Löslichkeit bzw. Durchdringung des zu extrahierenden Materials erreicht wird. Die Erzielung einer besseren Ausbeute erhöht jedoch den Zeitbedarf, wodurch die Verfahren unwirtschaftlich werden. Zudem ist die Anwendung dieser Verfahren auf ölhältige Stoffe begrenzt.

Ein Verfahren der eingangs genannten Art ist aus der WO 96/33861 bekannt, bei dem der Rohstoff unter Einspritzen eines Extraktionsmittels unter Druck verpreßt wird, wobei die Abseihzone durch den Außenmantel der Schneckenpresse druckfest gegen die Umgebung abgedichtet ist.

Bei dem Verfahren gemäß der WO 96/33861 wird zwar ein höherer Druck - sowohl durch die Zuführung von Extraktionsmittel unter Druck als auch durch eine druckfeste Ausgestaltung des Preßkörpers - erreicht, doch verteilt sich dieser Druck relativ gleichmäßig, da die Abseihung entlang der gesamten Schneckenpresse erfolgt und ein Entspannungsraum zumindest bis zum Außenmantel der Schneckenpresse auf der gesamten Länge derselben vorhanden ist. Im Vergleich zu den oben genannten Verfahren werden höhere Ausbeuten erzielt, doch bleibt der Einsatz des Verfahrens auf bestimmte extrahierbare Rohstoffe beschränkt.

Die Erfindung stellt sich die Aufgabe, ein Verfahren sowie eine Vorrichtung, genauer eine Schneckenpresse, bereitzustellen, mit welchen die Gewinnung von extrahierbaren Stoffen sowie die Durchführung bestimmter chemischer Umsetzungen mit hoher Ausbeute von bis zu 99,4%, bezogen auf den Gesamtgehalt des extrahierbaren Stoffes, und geringem Zeitaufwand, also in einem einzigen Arbeitsgang, möglich sind. Insbesondere sollen mit der erfindungsgemäßen Schneckenpresse auch Extraktionen und Umsetzungen durchgeführt werden können, bei denen im allgemeinen keine Presse verwendbar ist, wobei die Schneckenpresse dennoch konstruktiv besonders einfach gebaut sein soll. Weiters soll die Erfindung eine Möglichkeit liefern, auch Rohstoffe niedriger Güte bzw. niedrigen Wertstoffgehalts auf ökonomische Weise nutzbar zu machen.

Diese Aufgabe wird erfindungsgemäß dadurch gelöst, daß bei einem Verfahren der eingangs genannten Art eine Abseihung, über die Länge der Schneckenpresse gesehen, abschnittsweise in mindestens einem Bereich hohen Drucks in einer Abseihzone durchgeführt wird, und daß der Rohstoff vor der Abseihzone mit Extraktionsmittel und/oder Reaktanten versorgt und unter Drucksteigerung zur Abseihzone gefördert wird.

Vorzugsweise wird eine Abseihung abschnittsweise in Bereichen hoher Drücke in Abseihzonen durchgeführt und der Rohstoff zwischen den Abseihzonen mit Extraktionsmittel und/oder Reaktanten versorgt und unter Drucksteigerung zur nächsten Abseihzone gefördert.

Durch die Unterteilung der Abseihung des Rohstoffs in eine Abseihzone bzw. mehrere Abseihzonen hohen Drucks, welche einem Abschnitt folgt bzw. welche von Abschnitten unterbrochen werden, in denen keine Abseihung erfolgt und in denen Extraktionsmittel und/oder Reaktanten zugeführt werden, gelingt es, den Druck während des Verpressens innerhalb kürzester Zeit so sehr zu steigern, daß es zu einer kompletten Diffusion des Extraktionsmittels und/oder des Reaktanten im Rohstoff kommt. Die Löslichkeiten der extrahierbaren Stoffe bzw. die Umsetzungsgeschwindigkeiten liegen dabei in Größenordnungen, die innerhalb von mehreren Sekunden bis Minuten zu einer Abtrennung von über 99% der extrahierbaren Stoffe sowie zu erheblichen Umsetzungsraten führen. Die so extrahierten Stoffe und/oder Reaktionsprodukte werden in der bzw. den Abseihzonen, die am Ende der Verdichtungszonen angeordnet ist bzw. sind, mitsamt dem Extraktionsmittel und/oder übrigen Reaktant vom verpreßten Rohstoff abgetrennt.

Die Ausführungsform mit mehreren Abseihzonen ist besonders vorteilhaft, da die Abseihzonen mit dem vorangestellten Abschnitt, in dem Extraktionsmittel und/oder Reaktanten zugeführt werden, jeweils einen eigenen "Reaktor" bilden, aus welchem die extrahierbaren Stoffe und/oder Reaktionsprodukte abgeführt werden, bevor der Rohstoff zum nächsten Abschnitt gefördert wird. Die extraktiven Prozesse und/oder Umsetzungen sind somit nicht durch Diffusionsgleichgewichte oder Phasengleichgewichte limitiert, wie dies bei einfachen Waschungen mit Lösungsmittel der Fall ist, da es bei dem erfindungsgemäßen Verfahren zu einer vielstufigen, dynamischen Extraktion bzw. Umsetzung im Zusammenwirken mit dem Auspressen kommt.

Gemäß einer bevorzugten Ausführungsform werden Extraktionsmittel und/oder Reaktanten gemeinsam mit einem pulverförmigen oder flüssigen Katalysator zugeführt.

Dadurch ist das Verfahren auch für Umsetzungen geeignet, die in Abwesenheit eines Katalysators nur schwer durchführbar sind, beispielsweise katalytische Hydrierungen oder enzymatisch katalysierte Reaktionen.

Zweckmäßig werden Extraktionsmittel und/oder Reaktanten im gasförmigen oder im verflüssigten und/oder überkritischen Zustand zugeführt. Vorteilhaft ist auch eine Zuführung mit hoher Temperatur, da manche Vorgänge bei erhöhter Temperatur beschleunigt ablaufen.

Extraktionsmittel und/oder Reaktanten werden vorzugsweise nach ihrem Abseihen von den extrahierten Stoffen und/oder Reaktionsprodukten abgetrennt und dem Preßvorgang wieder zugeführt, wodurch Extraktionsmittel und/oder Reaktanten eingespart werden können. Die Abtrennung der extrahierten Stoffe und/oder Reaktionsprodukte erfolgt abhängig von ihrem Charakter und kann auf bekannte Weise durchgeführt werden, z.B. durch Destillation.

Zur Aufrechterhaltung einer guten Flüssigkeits- oder Gasdichtung werden dem Rohstoff vorteilhaft vor der Einbringung in die Schneckenpresse Dichtstoffe, wie Kautschukgranulat oder elastische Kunststoffgranulate, beigegeben und diese nach Verlassen der Schneckenpresse vom Rohstoff wieder getrennt und rückgeführt. Da manche Materialien, beispielsweise Mineralien, nicht die zum Aufrechterhalten bzw. Erhöhen des Drucks notwendige Dichtheit, welche von der Textur des Rohstoffs, dem gebildeten Druck sowie einigen anderen apparatespezifischen Parametern abhängt, aufweisen würden, können nun durch die Zugabe von Dichtstoffen auch solche, ursprünglich ungeeignete Stoffe als Rohstoffe eingesetzt werden.

Eine Ausführungsform des erfindungsgemäßen Verfahrens ist dadurch gekennzeichnet, daß als Rohstoffe öl-, zucker-, protein-, Terpen-, Aromaten- oder Duftstoff-hältige Stoffe und als Extraktionsmittel für den jeweiligen gewünschten extrahierbaren Stoff spezifische organische Lösungsmittel eingesetzt werden. Insbesondere betrifft diese Ausführungsform auch Rohstoffe, die nur eine niedrige Konzentration an extrahierbaren Stoffen aufweisen, so daß sie im allgemeinen nicht zur Gewinnung des extrahierbaren Stoffes herangezogen werden. Im Gegensatz zu herkömmlichen Verfahren müssen die Rohstoffe nach Zerkleinerung und Trocknung nicht stunden- bis tagelang mit Extraktionsmitteln gelaugt werden, bevor sie verpreßt werden.

Aufgrund des durch die Erfindung erzielbaren Effekts wird auch der Einsatz von ungefährlichen und für die Gesundheit unbedenklichen Lösungsmitteln, wie Ethanol oder Isopropanol, in reinem Zustand oder als Azeotrop möglich, welche zuvor als nicht ausreichend selektiv für manche Anwendungen erachtet wurden. Dies gestattet zum Beispiel die Ablöse der als umweltgefährdend und gesundheitsschädlich bekannten Hexantechnologie, da anstelle des Hexans nun unbedenkliche Lösungsmittel verwendbar sind.

Eine andere Ausführungsform des erfindungsgemäßen Verfahrens ist dadurch gekennzeichnet, daß als Rohstoff zu entfeuchtende Feststoffe und als Extraktionsmittel CO₂ eingesetzt werden.

Beispielsweise kann Kautschukgranulat, das bei der Gewinnung etwa 35-40% Feuchte aufweist und im allgemeinen durch simples Abpressen von Wasser auf 10% Feuchte reduziert und anschließend mit Heißluft auf einem Bandtrockner weiter getrocknet wird, erfindungsgemäß auf besonders ökonomische Art getrocknet werden. Dabei wird während des Pressens CO₂ in überkritischem Zustand eingespritzt und das Wasser in CO₂ gelöst abgeseiht. Die Abscheidung des Wassers aus CO₂ kann durch Druckabsenkung erfolgen. Das Kautschukgranulat kann somit in einem Arbeitsgang komplett über die Extraktion des Wassers durch CO₂ entfeuchtet werden.

Gemäß einer anderen Ausführungsform des erfindungsgemäßen Verfahrens werden als Rohstoffe zu hydrierende und/oder zu reformierende und/oder zu crackende organische Materialien oder Kohlen und als Reaktant Wasserstoff oder wasserstoffhältige Gase oder Flüssigkeiten eingesetzt.

Die für derartige Reaktionen benötigten hohen Drücke lassen sich ohne weiteres mittels des erfindungsgemäßen Verfahrens erzielen. Zur Aktivierung und Beschleunigung der Reaktionen werden in den Reaktanten gelöste oder feinverteilte Katalysatoren eingebracht. Zusätzlich zu den Reaktanten kann vor der letzten Abseihzone ein Lösungsmittel zur Extraktion der noch im Rohstoff befindlichen Reaktionsprodukte zugeführt werden.

Eine andere Ausführungsform des erfindungsgemäßen Verfahrens ist dadurch gekennzeichnet, daß als Rohstoffe vermahlene Mineralien und Erden und als Extraktionsmittel Kaliumcyanid, Natriumcyanid oder Thioharnstoff eingesetzt werden.

In dieser Ausführwgsform eignet sich das erfmdungsgemäße Verfahren beispielsweise zur Gewinnung von Edelmetallen, wie Gold, Silber und Platin, es kann jedoch auch zur Gewinnung anderer Metalle sowie von Metalloxiden oder Metallkomplexverbindungen angewandt werden.

Gemäß einer anderen Ausführungsform wird als Rohstoff ein Substrat und als Extraktionsmittel eine Enzymlösung eingesetzt.

Werden Enzyme dem Substrat unter hohem Druck, vorteilhaft unter überkritischen Bedingungen des Lösungsmittels, zugeführt, haben sie aufgrund der druckunterstützten schnelleren Diffusion bis auf Molekülebene einen äußerst schnellen Zutritt zu großen Substratoberflächen und können daher eine größere katalytische Aktivität entfalten, woraus wesentlich höhere Umsetzungsraten in enzymatisch katalysierten Reaktionen resultieren.

Gemäß einer weiteren Ausführungsform des erfindungsgemäßen Verfahrens werden als Rohstoff Kunststoffe und als Extraktionsmittel spezifische kunststofflösliche Lösungsmittel eingesetzt.

Das Resultat dieses Verfahrens ist die fraktionierte oder totale Lösung von Kunststoffen, wobei die Kunststoffe Reinkunststoffe oder Mischfraktionen darstellen können. Es werden somit Polymere, Monomere oder Copolymere unter Verwendung der jeweils spezifischen Lösungsmittel oder -gemische auf einfache Weise in ihre Komponenten zerlegt und aufgetrennt.

Eine Schneckenpresse zur Durchführung des erfindungsgemäßen Verfahrens, umfassend eine Zuführung für den Rohstoff, einen im wesentlichen zylindrischen Preßkörper mit Seiherelementen, eine im Preßkörper drehbar gelagerte Preßschnecke zur Beförderung und zum Verpressen des Rohstoffs, mindestens eine Vorrichtung zum Einbringen der Extraktionsmittel und/oder Reaktanten zwischen Preßkörper und Preßschnecke, mindestens eine Austrittsöffnung für extrahierte Stoffe und/oder Reaktionsprodukte und eine Austrittsöffnung für den verpreßten und extrahierten und/oder umgesetzten Rohstoff, wobei auf der Preßschnecke mindestens eine Drossel angeordnet ist, ist dadurch gekennzeichnet, daß
- der Preßkörper abwechselnd von mindestens einem Seihersegment und mindestens einem geschlossenen Segment gebildet ist, wobei das Seihersegment von einer geschlossenen Auffangkammer umgeben ist,
- das geschlossene Segment bezüglich der Preßschnecke vor einer bzw. zwischen zwei Drosseln angeordnet ist und eine druckaufbauende Kammer bildet,
- die druckaufbauende Kammer eine Öffnung und eine Vorrichtung zum Einspritzen von Extraktionsmitteln und/oder Reaktanten aufweist,
- das Seihersegment bezüglich der Preßschnecke jeweils im Bereich einer Drossel angeordnet ist und
- die Ausangkammer einen Auslaß für die extrahierbaren Stoffe und/oder Reaktionsprodukte aufweist.

Gemäß einer bevorzugten Ausführungsform der Schneckenpresse weist die Schneckenpresse mindestens zwei, durch ein Seihersegment voneinander getrennte, geschlossene Segmente auf.

Vorzugsweise ist die Preßschnecke hohl ausgebildet und weist vor einer bzw. zwischen zwei Drosseln mindestens eine Öffnung und eine Vorrichtung zum Einspritzen von Extraktionsmitteln und/oder Reaktanten auf.

Eine bevorzugte Ausgestaltung der erfindungsgemäßen Schneckenpresse besteht darin, daß das geschlossene Segment mehrere Öffnungen und Einspritzdüsen aufweist, wodurch dem Preßgut gleichzeitig an mehreren Stellen Extraktionsmittel und/oder Reaktanten sowie gleichzeitig verschiedene Extraktionsmittel und/oder Reaktanten zuführbar sind.

Zweckmäßig weist auch die Auffangkammer mehrere Auslässe auf.

Die Innenoberfläche des geschlossenen Segments und des Seihersegments sowie die äußere Oberfläche der Preßschnecke einschließlich der Drossel sind vorteilhaft mit abrasionsresistenten und/oder temperaturresistenten Materialien, wie Kautschuk verschiedenster Shore-Härte, Metall-, Metalloxid- oder Keramikschichten, ausgekleidet.

Gemäß einer anderen bevorzugten Ausgestaltung sind die Innenoberfläche des geschlossenen Segments und des Seihersegments sowie die äußere Oberfläche der Preßschnecke einschließlich der Drossel mit Festbettkatalysatorwerkstoff überzogen.

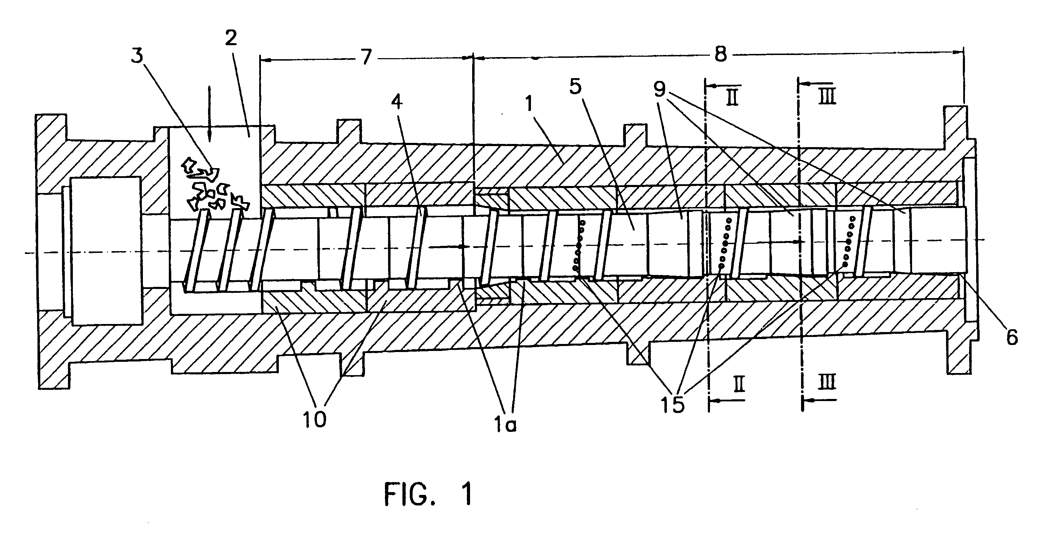

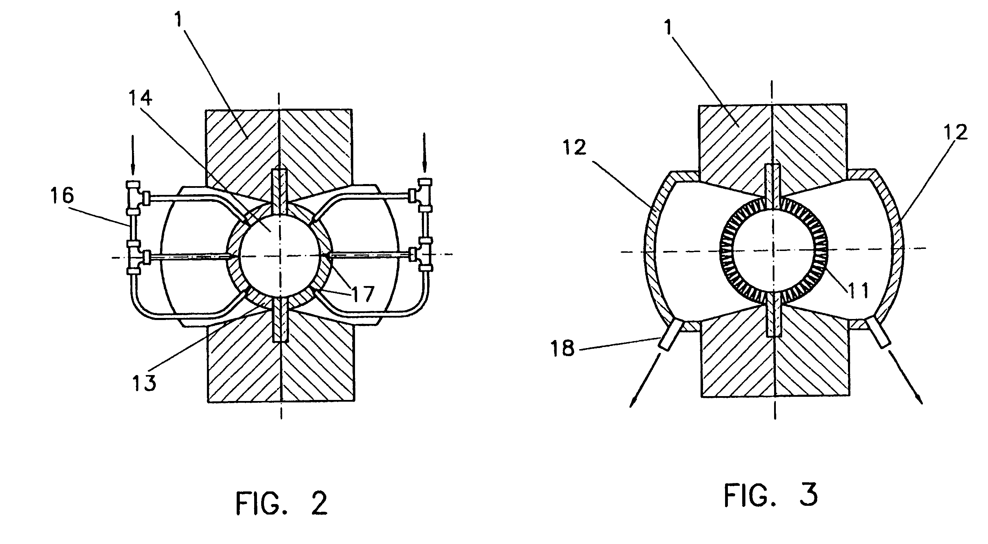

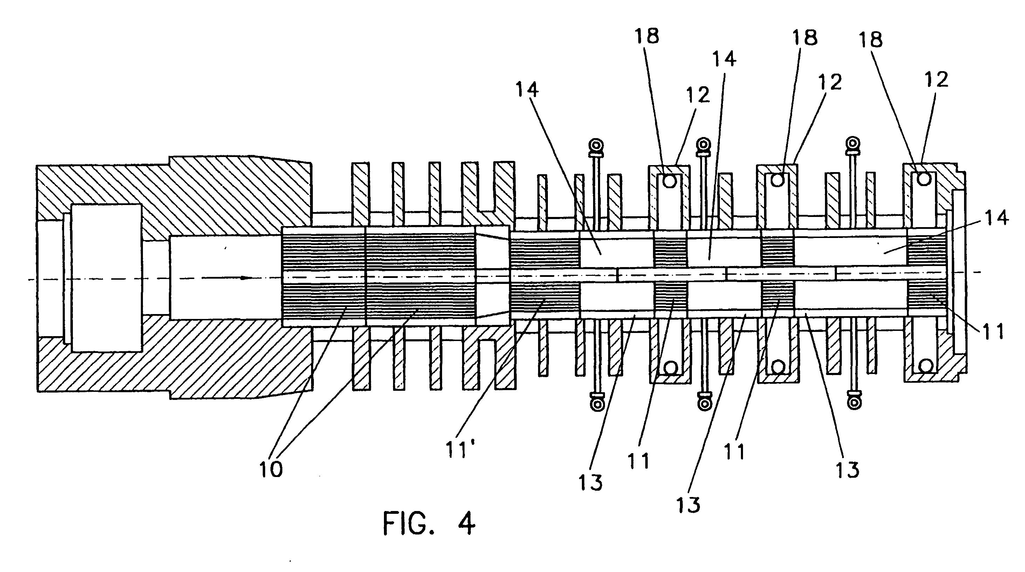

Die Erfindung ist nachfolgend anhand der Zeichnung näher erläutert, wobei Fig. 1 einen teilweise ausgeführten vertikalen Schnitt durch eine erfindungsgemäße Schneckenpresse in schematischer Darstellung, Fig. 2 und 3 jeweils eine Schnittdarstellung entlang der Linie II-II bzw. III-III der Fig. 1 und Fig. 4 einen teilweise ausgeführten horizontalen Schnitt in schematischer Darstellung veranschaulichen.

Die Figur 1 zeigt schematisch die teilweise Vertikalschnittdarstellung einer Ausführungsform der erfindungsgemäßen Schneckenpresse. Die Bezugsziffer 1 bezeichnet einen leicht konischen Preßkörper, der mit einer Zuführung 2 für den zu verpressenden und extrahierenden und/oder umzusetzenden Rohstoff 3 in Verbindung steht. Der Rohstoff 3 wird von den Schneckengängen 4 einer Preßschnecke 5, die selbst nicht geschnitten dargestellt ist, erfaßt und in den Preßkörper 1 gefördert, durch diesen hindurchtransportiert und durch die Austrittsöffnung 6 hinausgepreßt. Der Preßkörper 1 weist an seiner Innenseite in Richtung zur Preßschnecke 5 stufenförmige Vorsprünge 1a, sogenannte Zähne, auf, die einerseits der Durchmischung des Rohstoffs 3 dienen und andererseits ein Mitrotieren des Rohstoffs 3 mit der Preßschnecke 5 verhindern. (Die Richtung des Rohstofftransports ist mit Pfeilen veranschaulicht.) Am Ausgang der Schneckenpresse kann zur Rückgewinnung von Extraktionsmitteln und/oder Reaktanten aus dem verpreßten Rohstoff 3 ein Desolventizer angeordnet sein.

In der gezeigten Ausgestaltung ist der Preßkörper 1 in zwei Abschnitte unterteilt. Der benachbart der Zuführung 2 des Rohstoffs 3 angeordnete Abschnitt 7 weist einen größeren Hohlraumdurchmesser als der anschließende Abschnitt 8 auf. Der sich im Hohlraum des Abschnitts 8 befindende Teil der Preßschnecke 5 weist kegelstumpfförmige Erweiterungen, sogenannte Drosseln 9, auf, in der gezeigten Ausführungsform drei an der Zahl, an welchen das Preßgut einem erhöhten Druck ausgesetzt ist. Nach Überwinden einer derartigen Drossel sinkt der Druck naturgemäß wieder etwas ab.

In Abschnitt 7 ist der Hohlraum des Preßkörpers 1 von Seiherelementen 10 begrenzt, welche Öffnungen bilden, durch die Extrakt, z.B. Öl, nach unten fließt und den Preßkörper 1 verläßt. Das den Preßkörper 1 im Abschnitt 7 verlassende Öl wird von einer Wanne (nicht dargestellt) aufgefangen. Abschnitt 7 kann jedoch auch gänzlich entfallen.

Der Hohlraum des Abschnitts 8 ist abwechselnd von zwei verschiedenartigen Segmenten begrenzt. Das erste Segment bildet ein Seihersegment 11, welches von einer geschlossenen Auffangkammer 12 (Fig. 3 und Fig. 4) umschlossen ist. Das zweite Segment wird von einem geschlossenen Segment 13 (Fig. 2 und Fig. 4) gebildet, das keinen Flüssigkeits- und Gasaustritt zuläßt.

Das geschlossene Segment 13 ist bezüglich der Preßschnecke 5 jeweils so vor einer bzw. zwischen zwei Drosseln 9 angeordnet, daß eine druckaufbauende Kammer 14 gebildet wird, in der eine relativ geringe Druckbelastung herrscht. Die Seihersegmente 11 sind hingegen jeweils dort angeordnet, wo das Preßgut aufgrund der Drosseln 9 einer hohen Druckbelastung ausgesetzt ist.

Die Preßschnecke 5 ist hohl und weist Öffnungen 15 auf, durch welche flüssige oder gasförmige Extraktionsmittel, Extraktionsmittelgemische oder Reaktanten unter Druck in den Rohstoff 3 eingebracht werden. Das Extraktionsmittel wird über eine nicht gezeigte Zuleitung unter Druck der hohlen Preßschnecke 5 zugeführt.

Gemäß dem in Fig. 2 dargestellten Schnitt entlang der Linie II-II der Fig. 1 (die Preßschnecke 5 ist der Übersichtlichkeit halber weggelassen) wird das Extraktionsmittel mittels Zuleitungen 16 über mehrere Öffnungen 17, z. B. Einspritzdüsen, im geschlossenen Segment 13 dem zu verpressenden Rohstoff 3 in der druckaufbauenden Kammer 14 unter Druck zugeführt, wobei die Öffnungen 17 unmittelbar nach einer Drossel 9 der Preßschnecke 5, also in einer Zone geringer Druckbelastung, vorgesehen sind. Durch das kurzzeitige Entspannen nach der Drossel kann das eingespritzte Extraktionsmittel bis auf Molekülebene oder bei biologischen Rohstoffen sogar bis auf Zellwandebene diffundieren.

Fig. 3 zeigt einen entlang der Linie III-III der Fig. 1 geführten Schnitt im Bereich eines Seihersegments 11. Das Seihersegment 11 ist von einer geschlossenen Auffangkammer 12 umgeben, die dazu dient, das mittels des Seihersegments 11 vom Rohstoff 3 unter Druck getrennte Extrakt/Extraktionsmittel-Gemisch bzw. Reaktionsprodukt/Reaktant-Gemisch aufzufangen. Die Ableitung des Gemisches erfolgt über druckfeste Auslässe 18.

In Fig. 4 sind die einzelnen Segmente des Preßkörpers 1 in Abschnitt 8, nämlich die Seihersegmente 11 und die geschlossenen Segmente 13, die die Seihersegmente 11 umgebenden Auffangkammern 12 mit ihren Auslässen 18 sowie die Zuleitungen 16 einer erfindungsgemäßen Schneckenpresse im Horizontalschnitt veranschaulicht (die Preßschnecke 5 ist nicht dargestellt). Da der Preßkörper in einzelne Segmente unterteilt ist, wobei ein geschlossenes Segment 13 und ein Seihersegment 11 jeweils einen "Reaktor" bilden, lassen sich Parameter, wie Feststoffdurchsatz, Druck, Temperatur und Verweilzeit, durch individuelle Ausgestaltung exakt steuern und so verschiedenste Reaktionsbedingungen herstellen. Vorteilhaft ist auch, daß in einem Arbeitsgang durch Anwendung verschiedener Extraktionsmittel in den einzelnen "Reaktoren" verschiedene Substanzen nacheinander aus ein und demselben Rohstoff extrahierbar sind.

Bei der gezeigten Ausgestaltung ist das in Transportrichtung des Rohstoffs 3 gesehen erste Seihersegment 11 in Abschnitt 8 noch nicht von einer Auffangkammer 12 umgeben. Die in Transportrichtung letzte druckaufbauende Kammer 14 bzw. das letzte Segment 13 sind größer bzw. breiter dimensioniert als die vorangegangenen. Dies hat beispielsweise bei Hydrierungsprozessen, bei denen vorteilhaft zusätzlich zu den wasserstoffhältigen Stoffen in der letzten Druckkammer zur Extraktion der noch im Rohstoff vorhandenen Reaktionsprodukte ein Lösungsmittel eingespritzt wird, den Vorteil, daß auch für die Extraktion genug Zeit bleibt, bevor die Abpressung vom Rohstoff erfolgt.

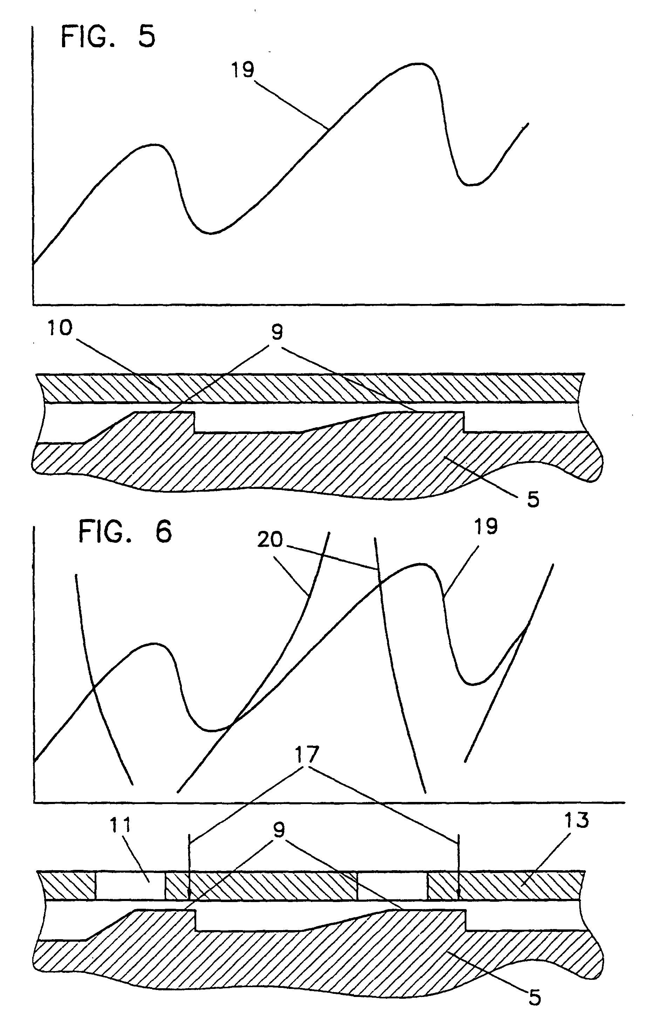

Fig. 5 zeigt einen Druckverlauf 19 innerhalb des Preßkörpers 1 einer Schneckenpresse gemäß Stand der Technik, wobei die Abszisse die Länge eines Teils der Preßschnecke 5 und des Preßkörpers 1 und die Ordinate den Druck angibt. Es ist der Fig. 5 zu entnehmen, wie der durch die Preßschnecke 5 auf den Rohstoff 3 ausgeübte Druck im Bereich einer Drossel 9 stark ansteigt, nach der Drossel 9 wieder scharf abfällt und danach bis zur nächsten Drossel 9 wieder kontinuierlich zunimmt. Während des gesamten Vorgangs wird Extrakt durch die Seiherelemente 10 gepreßt.

In Fig. 6 ist ein Druckverlauf 20 im Preßkörper 1 einer erfindungsgemäßen Schneckenpresse im Vergleich zu jenem in Fig. 5 dargestellt. An den durch Pfeile markierten Stellen wird durch die Öffnungen 17 im geschlossenen Segment 13 und/oder durch die Öffnungen 15 in der Preßschnecke, welche sich an etwa derselben Stelle bezüglich der Drossel 9 wie die Öffnungen 17 befinden, Extraktionsmittel unter Druck dem in Entspannung befindlichen Rohstoff 3 zugeführt, vorzugsweise in einer Menge, die ausreicht, um alle Poren der Rohstoffmatrix zu füllen. Durch die mechanische Aktion der Preßschnecke 5 wird die Rohstoffmatrix so weit zusammengedrückt, daß sich der Druck innerhalb der Poren durch Volumensverringerung exponentiell erhöht und am Punkt des höchsten Drucks über die in Höhe der Drosseln 9 angeordneten Seihersegmente 11 nach außen in die Auffangkammern 12 entweichen kann. Auf dem Weg vom Einspritzpunkt zur nächsten Drossel 9 kann das Extraktionsmittel nicht entweichen, da die geschlossenen Segmente 13 dies verhindern. Die Zeit, in der der Rohstoff 3 dieser kombinierten Aktion pro von Segment 13 und Seihersegment 11 gebildetem "Reaktor" ausgesetzt ist, beträgt nur wenige Sekunden, reicht aber aus, um bis über 99% des zu extrahierenden Stoffes aus dem Rohstoff 3 zu gewinnen.

Der auf den Rohstoff 3 durch die Preßschnecke 5 ausgeübte Druck wird durch den dynamischen Druck des eingespritzten Extraktionsmittels überlagert und erreicht insgesamt aufgrund der Tatsache, daß durch die Segmente 13 nichts entweichen kann, Werte von mehreren 100 bar bis einigen 1000 bar. Durch Entweichen des Extrakt/Extraktionsmittel-Gemisches im Bereich der Seihersegmente 11 in die Auffangkammern 12 und durch die Herabsetzung der Druckbelastung nach der Drossel 9 sinkt der Druck wieder ab, um dann erneut bei der nächsten Zufuhr an Extraktionsmittel und durch die nächste Drossel 9 anzusteigen.

In Richtung Austritt des Rohstoffs 3 aus der Schneckenpresse ist darauf zu achten, daß die Porengröße des Rohstoffs 3 durch dichtere Packung, d.h. erhöhten Druck, kleiner ist als die Molekülgröße des Extraktionsmittels und/oder Reaktanten, um den Restlösungsmittelaustritt zu minimieren.

### Beispiel A

In einer zu einer erfindungsgemäßen Schneckenpresse umgebauten Presse EP-08 der Fa. Krupp mit einer nominalen Kapazität von 1000 kg Rohmaterial/h wird nach Konditionierung Soja ungeschält, mit 20,2% Öl auf 1/16 gebrochen, mit einer Temperatur von 137°C und einer Restfeuchte von 3,5% unter Einspritzung von Reinisopropanol mit 300 bar Druck gepreßt.

Der erhaltene Preßkuchen hatte 6,5% Gesamtfeuchte (H₂O + Isopropanol) und einen Restölgehalt von 0,89%.

### Beispiel B

In einer zu einer erfindungsgemäßen Schneckenpresse umgebauten Presse EP-08 der Fa. Krupp wurde Soja mit 20,2% Ölgehalt ungeschält und ohne Konditionierung mit einer Umgebungstemperatur von 35°C und einer Restfeuchte von 9% unter Einspritzung von azeotropem Isopropanol (83% Isopropanol, 17% H₂O) unter 300 bar Druck gepreßt. Der erhaltene Preßkuchen hatte 8,3% Restfeuchte (H₂O + Isopropanol) und einen Restölgehalt von 1,13%.

In Beispiel A und B war die Restwärme des Preßkuchens ausreichend, um den Restalkohol in einem Desolventizer unter Vakuum auszutreiben. Mit dem azeotropen Isopropanol konnte problemlos die Qualität "White Flakes" mit einer Wasserlöslichkeit des Proteins von 85% erreicht werden.

### Beispiel C

Teilentschälte Samen der "Jatropha Curcas" mit einem Ölgehalt von 48% wurden in einer zu einer erfindungsgemäßen Schneckenpresse umgebauten Presse EP-08 der Fa. Krupp gepreßt. Es wurde reines Isopropanol eingesetzt. Die Samen hatten nach dem Konditionierer eine Restfeuchte von 4,2% und eine Temperatur von 130°C. Entschälungsgrad: 17% Schalenanteil.
Einspritzdruck des Isopropanol: 286 bar
Der Preßkuchen hatte eine Gesamtfeuchte von 4,5%. Der Restölgehalt des Preßkuchens betrug 0,34%. Der Restphorbolestergehalt (Eingangsgehalt: 2,65%) betrug 0,045%. In einem Arbeitsgang wurden gleichzeitig der hochtoxische Phorbolester und das Öl extrahiert. Der Extraktionsgrad ist 99,4%.

In Beispiel A, B und C wurden jeweils 260 Liter Isopropanol pro Tonne Eingangsmaterial eingespritzt.

### Beispiel D

In einer zu einer erfindungsgemäßen Schneckenpresse umgebauten Presse EP-08 der Fa. Krupp wurden vorgetrocknete Eukalyptusblätter mit azeotropem Ethanol gepreßt. Der Einspritzdruck betrug 300 bar. Die trockenen Blätter hatten einen Gehalt an essentiellem Öl von 1,32%. Der Preßkuchen hatte einen Gehalt an essentiellem Öl unter 0,015%. Der Restsolventgehalt im Preßkuchen betrug 7,6%.

### Beispiel E

In einer zu einer erfindungsgemäßen Schneckenpresse umgebauten Presse EP-08 der Fa. Krupp wurde Kautschukgranulat mit 38% Feuchte unter Einspritzung von CO₂ mit 180 bar und 33°C verpreßt. Pro Tonne Granulat wurden 460 Liter flüssiges CO₂ eingespritzt. Das die Presse am Austrittsende verlassende Granulat hatte weniger als 1% Restfeuchte. Nach Absenken des Drucks konnte das Wasser problemlos von CO₂ abgeschieden werden.

### Beispiel F

In einer zu einer erfindungsgemäßen Schneckenpresse umgebauten Presse EP-08 der Fa. Krupp wurde Gesteinsmehl, das in einer Kugelmühle auf 60 mesh zerkleinert wurde, in Gegenwart von Kautschukgranulat verpreßt und CO₂ in überkritischem Zustand mit Kaliumcyanid 4% unter einem Druck von 280 bar und 35°C beaufschlagt. Das Gesteinsmehl hatte am Eintritt 6,8 g Gold und 2,3 g Silber pro Tonne. Am Austritt aus der Presse nach Separation des Gesteinsmehls vom Kautschukgranulat wurden ein Goldgehalt von 0,23 g/t und ein Silbergehalt von 0,04 g/t ermittelt. Der Verbrauch an Kaliumcyanid und Wasser im Vergleich zur Schlämmethode war um ca. 80% niedriger. Das Kautschukgranulat war für eine Wiederverwendung geeignet.

## Patentansprüche

1. Verfahren zum Gewinnen von extrahierbaren Stoffen und/oder Reaktionsprodukten aus Rohstoffen (3) durch Pressen und Extrahieren und/oder Umsetzen in Gegenwart eines oder mehrerer flüssiger oder gasförmiger Extraktionsmittel und/oder Reaktanten, wobei der Rohstoff (3) mittels einer Schneckenpresse entlang derselben abwechselnd in Verdichtungszonen verdichtet und in Entspannungszonen entspannt wird und ein Extraktionsmittel und/oder Reaktant dem Rohstoff (3) in den Entspannungszonen zugeführt wird, und wobei entlang der Schneckenpresse eine Abseihung der extrahierten Stoffe und/oder Reaktionsprodukte durchgeführt wird, **dadurch gekennzeichnet, daß** eine Abseihung, über die Lange der Schneckenpresse gesehen, abschnittsweise in mindestens einem Bereich hohen Drucks in einer Abseihzone durchgeführt wird, und daß der Rohstoff vor der Abseihzone mit Extraktionsmittel und/oder Reaktanten im verflüssigten und/oder überkritischen Zustand versorgt und unter Drucksteigerung zur Abseihzone gefördert wird.

2. Verfahren nach Anspruch 1, **dadurch gekennzeichnet, daß** eine Abseihung, über die Länge der Schneckenpresse gesehen, abschnittsweise in Bereichen hoher Drücke in Abseihzonen durchgeführt wird, und daß der Rohstoff (3) zwischen den Abseihzonen mit Extraktionsmittel und/oder Reaktanten versorgt und unter Drucksteigerung zur nächsten Abseihzone gefördert wird.

3. Verfahren nach Anspruch 1 oder 2, **dadurch gekennzeichnet, daß** Extraktionsmittel und/oder Reaktanten gemeinsam mit einem pulverförmigen oder flüssigen Katalysator zugeführt werden.

4. Verfahren nach einem oder mehreren der Ansprüche 1 bis 3, **dadurch gekennzeichnet, daß** Extraktionsmittel und/oder Reaktanten mit hoher Temperatur zugeführt werden.

5. Verfahren nach einem oder mehreren der Ansprüche 1 bis 4, **dadurch gekennzeichnet, daß** die Extraktionsmittel und/oder Reaktanten nach ihrem Abseihen von den extrahierten Stoffen und/oder Reaktionsprodukten abgetrennt und dem Preßvorgang wieder zugeführt werden.

6. Verfahren nach einem oder mehreren der Ansprüche 1 bis 5, **dadurch gekennzeichnet, daß** dem Rohstoff (3) zur Aufrechterhaltung einer guten Flüssigkeits- oder Gasdichtung vor Einbringung in die Schneckenpresse Dichtstoffe, wie Kautschukgranulat oder elastische Kunststoffgranulate, beigegeben werden und diese nach Verlassen der Schneckenpresse vom Rohstoff (3) getrennt und rückgeführt werden.

7. Verfahren nach einem oder mehreren der Ansprüche 1 bis 6, **dadurch gekennzeichnet, daß** als Rohstoffe (3) öl-, zucker-, protein-, Terpen-, Aromaten- oder Duftstoff-hältige Stoffe und als Extraktionsmittel für den jeweiligen gewünschten extrahierbaren Stoff spezifische organische Lösungsmittel eingesetzt werden.

8. Verfahren nach einem oder mehreren der Ansprüche 1 bis 6, **dadurch gekennzeichnet, daß** als Rohstoff (3) zu entfeuchtende Feststoffe und als Extraktionsmittel CO₂ eingesetzt werden.

9. Verfahren nach einem oder mehreren der Ansprüche 1 bis 6, **dadurch gekennzeichnet, daß** als Rohstoff (3) zu hydrierende und/oder zu reformierende und/oder zu crackende organische Materialien oder Kohlen und als Reaktant Wasserstoff oder wasserstoffhältige Gase oder Flüssigkeiten eingesetzt werden.

10. Verfahren nach einem oder mehreren der Ansprüche 1 bis 6, **dadurch gekennzeichnet, daß** als Rohstoff (3) Mineralien und Erden und als Extraktionsmittel Kaliumcyanid, Natriumcyanid oder Thiourea eingesetzt werden.

11. Verfahren nach einem oder mehreren der Ansprüche 1 bis 6, **dadurch gekennzeichnet, daß** als Rohstoff (3) ein Substrat und als Extraktionsmittel eine Enzymlösung eingesetzt werden.

12. Verfahren nach einem oder mehreren der Ansprüche 1 bis 6, **dadurch gekennzeichnet, daß** als Rohstoff (3) Kunststoffe und als Extraktionsmittel spezifische kunststofflösliche Lösungsmittel eingesetzt werden.

13. Schneckenpresse zur Durchführung eines Verfahrens nach einem oder mehreren der Ansprüche 1 bis 12, umfassend eine Zuführung (2) für den Rohstoff (3), einen im wesentlichen zylindrischen Preßkörper (1) mit Seiherelementen (10, 11), eine im Preßkörper (1) drehbar gelagerte Preßschnecke (5) zur Beförderung und zum Verpressen des Rohstoffs (3), mindestens eine Vorrichtung (15, 16) zum Einbringen der Extraktionsmittel und/oder Reaktanten zwischen Preßkörper (1) und Preßschnecke (5), mindestens eine Austrittsöffnung (18) für extrahierte Stoffe und/oder Reaktionsprodukte und eine Austrittsöffnung (6) für den verpreßten und extrahierten und/oder umgesetzten Rohstoff (3), wobei auf der Preßschnecke (5) mindestens eine Drossel (9) angeordnet ist, **dadurch gekennzeichnet, daß**
• der Preßkörper (1) abwechselnd von mindestens einem Seihersegment (11) und mindestens einem geschlossenen Segment (13) gebildet ist, wobei das Seihersegment (11) von einer geschlossenen Auffangkammer (12) umgeben ist,
• das geschlossene Segment (13) bezüglich der Preßschnecke (5) vor einer bzw. zwischen zwei Drosseln (9) angeordnet ist und eine druckaufbauende Kammer (14) bildet,
• die druckaufbauende Kammer (14) eine Öffnung (17) und eine Vorrichtung (16) zum Einspritzen von Extraktionsmitteln und/oder Reaktanten im verflüssigten und/oder überkritischen Zustand aufweist,
• das Seihersegment (11) bezüglich der Preßschnecke (5) jeweils im Bereich einer Drossel (9) angeordnet ist und
• die Auffangkammer (12) einen druckfesten Auslaß (18) für die extrahierbaren Stoffe und/oder Reaktionsprodukte aufweist.

14. Schneckenpresse nach Auspsuch 13, **dadurch gekennzeichnet, daß** die Schneckenpresse mindestens zwei, durch ein Seihersegment (11) voneinander getrennte, geschlossene Segmente (13) aufweist.

15. Schneckenpresse nach Anspruch 13 oder 14, **dadurch gekennzeichnet, daß** die Preßschnecke (5) hohl ausgebildet ist und vor einer bzw. zwischen zwei Drosseln (9) mindestens eine Öffnung (15) und eine Vorrichtung zum Einspritzen von Extraktionsmittel und/oder Reaktanten aufweist.

16. Schneckenpresse nach einem oder mehreren der Ansprüche 13 bis 15, **dadurch gekennzeichnet, daß** das geschlossene Segment (13) mehrere Öffnungen (17) und Einspritzdüsen aufweist.

17. Schneckenpresse nach einem oder mehreren der Ansprüche 13 bis 16, **dadurch gekennzeichnet, daß** die Auffangkammer (12) mehrere Auslässe (18) ausweist.

18. Schneckenpresse nach einem oder mehreren der Ansprüche 13 bis 17, **dadurch gekennzeichnet, daß** die Innenoberfläche des geschlossenen Segments (13) und des Seihersegments (11) sowie die äußere Oberfläche der Preßschnecke (5) einschließlich der Drossel (9) mit abrasionsresistenten und/oder temperaturresistenten Materialien, wie Kautschuk verschiedenster Shore-Härte, Metall-, Metalloxid- oder Keramikschichten, ausgekleidet sind.

19. Schneckenpresse nach einem oder mehreren der Ansprüche 13 bis 17, **dadurch gekennzeichnet, daß** die Innenoberfläche des geschlossenen Segments (13) und des Seihersegments (11) sowie die äußere Oberfläche der Preßschnecke (5) einschließlich der Drossel (9) mit Festbettkatalysatorwerkstoff überzogen ist.

20. Verwendung der Schneckenpresse gemäß einem oder mehreren der Ansprüche 13 bis 19 zur Gewinnung von Ölen, Zucker, Proteinen, Terpenen, Aromaten und Duftstoffen aus organischen Rohstoffen.

21. Verwendung der Schneckenpresse gemäß einem oder mehreren der Ansprüche 13 bis 19 zur Entfeuchtung von Feststoffen.

22. Verwendung der Schneckenpresse gemäß einem oder mehreren der Ansprüche 13 bis 19 zum Hydrieren und/oder Reformieren und/oder Cracken von organischen Materialien.

23. Verwendung der Schneckenpresse gemäß einem oder mehreren der Ansprüche 13 bis 19 zur Gewinnung von Metallen, insbesondere Edelmetallen, Metalloxiden und Metallkomplexverbindungen aus Mineralien, Erden etc.

24. Verwendung der Schneckenpress gemäß einem oder mehreren der Ansprüche 13 dis 19 zur Gewinnung von enzymatisch katalysierten Produkten.

25. Verwendung der Schneckenpresse gemäß einem oder mehreren der Ansprüche 13 bis 19 zur Fraktionierung von Kunststoffen.

## Claims

1. Method for obtaining extractable substances and/or reaction products from raw materials (3) by pressing and extraction and/or reaction in the presence of one or more liquid or gaseous extraction agents and/or reactants, wherein the raw material is alternately compressed by means of a worm extruder in compression zones and relaxed in relaxation zones and an extraction agent and/or reactant is supplied to the raw material (3) in the relaxation zones and wherein a straining of the extracted substances and/or reaction products is carried out along the worm extruder, **characterized in that**, when considered over the length of the worm extruder a straining process is carried out section-wise in at least one zone of high pressure in a straining zone, and **in that** the raw material is provided upstream of the straining zone with extraction agent and/or reactants in a liquefied and/or supercritical state and is conveyed with a pressure increase to the straining zone.

2. Method in accordance with claim 1, **characterized in that** a straining is carried out, when viewed over the length of the worm extruder, section-wise in regions of high pressure in straining zones and **in that** the raw material (3) is supplied between the straining zones with extraction agent and/or reactants and is conveyed with pressure increase to the next extraction zone.

3. Method in accordance with claim 1 or claim 2, **characterized in that** extraction agent and/or reactants are supplied together with a powder-like or liquid catalyst.

4. Method in accordance with one or more of the claims 1 to 3, **characterized in that** extraction agent and/or reactants are supplied at high temperature.

5. Method in accordance with one or more of the claims 1 to 4, **characterized in that** the extraction agent and/or reactants are separated after their straining from the extracted materials and/or reaction products and are supplied again to the pressing process.

6. Method in accordance with one or more of the claims 1 to 5, **characterized in that** sealing materials such as rubber granulate or elastic plastic granulate are added to the raw material (3) prior to introduction into the worm extruder to maintain a good liquid or gas seal and that they are separated from the raw material (3) after leaving the worm extruder and returned.

7. Method in accordance with one or more of the claims 1 to 6, **characterized in that** substances containing oil, sugar, protein, terpene, aromatics or perfumes are used as the raw materials (3) and specific organic solvents are used as the extraction agent for the respectively desired substance which is to be extracted.

8. Method in accordance with one or more of the claims 1 to 6, **characterized in that** solid substances which are to be dehumidified are used as the raw material (3) and CO₂ is used as the extraction agent.

9. Method in accordance with one or more of the claims 1 to 6, **characterized in that** organic materials or carbons which are to be hydrogenated and/or to be reformed and/or to be cracked are used as the raw material (3) and hydrogen or hydrogen containing gases or liquids are used as the reactant.

10. Method in accordance with one or more of the claims 1 to 6, **characterized in that** minerals and earths are used as the raw materials and potassium cyanide, sodium cyanide or thiourea are used as the extraction agent.

11. Method in accordance with one or more of the claims 1 to 6, **characterized in that** a substrate is used as the raw material (3) and an enzyme solution is used as the extraction agent.

12. Method in accordance with one or more of the claims 1 to 6, **characterized in that** plastics are used as the raw material (3) and specific plastic dissolving solvents are used as the extraction agent.

13. Worm extruder for carrying out the method of one or more of the claims 1 to 12, comprising a supply (2) for the raw material (3), a substantially cylindrical pressing body (1) with straining elements (10, 11), an extruding worm (5) rotatably journalled in the extruder body (1) for conveying and for pressing the raw material (3), at least one device (15, 16) for the introduction of the extraction agent and or of reactants between the extruder body (1) and the extruder worm (5), at least one outlet opening (18) for extracted substances and/or reaction products and an outlet opening (6) for the pressed and extracted and/or reacted raw material (3), wherein at least one restrictor (9) is arranged on the extruder worm (5), **characterized in that**
- the extruder body (1) is alternately formed by at least one straining element (11) and at least one closed segment (13), with the straining segment (11) being surrounded by a closed collecting chamber (12),
- the closed segment (13) is arranged with respect to the extruder worm (5) before a restrictor or between two restrictors (9) and a pressure building chamber (14),
- the pressure building chamber (14) has an opening (17) and a device (16) for the injection of extraction agents and/or reactants in the liquefied state and/or in the supercritical state,
- the straining segment (11) is arranged with respect to the extruder worm (5) in each case in the vicinity of a restrictor (9) and
- the collecting chamber (12) has a pressure-tight outlet (14) for the extractable substances and/or the reaction products.

14. Worm extruder in accordance with claim 13, **characterized in that** the worm extruder has at least two closed segments (13) separated from one another by a straining segment (11).

15. Worm extruder in accordance with claim 13 or claim 14, **characterized in that** the extruder worm (5) is of hollow design and has, before one restrictor or between two restrictors (9), at least one opening and a device for the injection of extraction agent and/or reactants.

16. Worm extruder in accordance with one or more of the claims 13 to 14, **characterized in that** the closed segment (13) has a plurality of openings (17) and injection nozzles.

17. Worm extruder in accordance with one or more of the claims 13 to 17, **characterized in that** the collecting chamber (12) has a plurality of outlets (18).

18. Worm extruder in accordance with one or more of the claims 13 to 17, **characterized in that** the inner surface of the closed segment (13) and of the straining segment (11) and also the outer surface of the extruder worm (5) including the restrictor (9) is lined with abrasion resistant and/or temperature resistant materials such as rubber of different shore hardnesses, metal layers, metal oxide layers or ceramic layers.

19. Worm extruder in accordance with one or more of the claims 13 to 17, **characterized in that** the inner surface of the closed segment (13) and of the straining segment (11) and also the outer surface of the worm extruder (5) including the restrictor (9) is coated with a solid bed catalyst material.

20. Use of the worm extruder in accordance with one or more of the claims 13 to 19, for obtaining oils, sugar, protein, terpenes, aromatics and perfumes from organic raw materials.

21. Use of the worm extruder in accordance with one or more of the claims 13 to 19, for the dehumidification of solid materials.

22. Use of the worm extruder in accordance with one or more of the claims 13 to 19 for the hydrogenation and/or reformation and/or cracking of organic materials.

23. Use of the worm extruder in accordance with one or more of the claims 13 to 19 for obtaining metals, in particular noble metals, metal oxides and metal complex compounds from minerals, earths etc.

24. Use of the worm extruder in accordance with one or more of the claims 13 to 19 for the obtaining of enzymatic catalysed products.

25. Use of the worm extruder in accordance with one or more of the claims 13 to 19 for the fractionation of plastics.

## Revendications

1. Procédé d'obtention de substances et/ou de produits de réaction qui peuvent être extraits à partir de matières (3) premières par pressage et extraction et/ou réaction en présence d'un ou de plusieurs agents d'extraction et/ou réactifs liquides ou gazeux, la matière (3) première étant, au moyen d'une extrudeuse, le long de celle-ci en alternance comprimée dans des zones de compression et détendue dans des zones de détente et un agent d'extraction et/ou un réactif étant ajouté à la matière (3) première dans les zones de détente et dans lequel on effectue le long d'une extrudeuse une filtration des substances et/ou des produits de réaction extraits, **caractérisé en ce que** l'on effectue une filtration, telle que considérée sur la longueur de l'extrudeuse, par tronçon dans au moins une partie de haute pression dans une zone de filtration et **en ce que** l'on alimente la matière première en agent et/ou en réactif d'extraction à l'état liquide et/ou surcritique en amont de la zone de filtration et on la transporte avec augmentation de la pression vers la zone de filtration.

2. Procédé suivant la revendication 1, **caractérisé en ce que** l'on effectue une filtration, telle que considérée sur la longueur de l'extrudeuse, par tronçon dans des parties de haute pression dans des zones de filtration et **en ce que** l'on alimente la matière (3) première entre les zones de filtration en agents d'extraction et/ou en réactifs.

3. Procédé suivant la revendication 1 ou 2, **caractérisé en ce que** l'on apporte des agents d'extraction et/ou des réactifs conjointement avec un catalyseur sous forme de poudre ou liquide.

4. Procédé suivant l'une ou plusieurs des revendications 1 à 3, **caractérisé en ce que** l'on apporte des agents d'extraction et/ou des réactifs à haute température.

5. Procédé suivant l'une ou plusieurs des revendications 1 à 4, **caractérisé en ce que** l'on sépare les agents d'extraction et/ou les réactifs après leur filtration des substances extraites et/ou des produits de réaction et on les retourne à l'opération de compression.

6. Procédé suivant l'une ou plusieurs des revendications 1 à 5, **caractérisé en ce que** l'on ajoute à la matière (3) première, pour maintenir une bonne étanchéité aux liquides ou aux gaz, avant l'introduction dans l'extrudeuse des substances d'étanchéité comme du granulé de caoutchouc ou du granulé de matière plastique élastique et on les sépare de la matière (3) première après qu'elles ont quitté l'extrudeuse et on les recycle.

7. Procédé suivant l'une ou plusieurs des revendications 1 à 6, **caractérisé en ce que** l'on utilise, comme matières (3) premières, des substances contenant des huiles, des sucres, des protéines, des terpènes, des produits aromatiques ou des arômes et, comme agents d'extraction pour la substance souhaitée respective pouvant être extraite, des solvants organiques spécifiques.

8. Procédé suivant l'une ou plusieurs des revendications 1 à 6, **caractérisé en ce que** l'on utilise, comme matière (3) première, des substances solides à déshydrater et, comme agent d'extraction, du CO₂.

9. Procédé suivant l'une ou plusieurs des revendications 1 à 6, **caractérisé en ce que** l'on utilise, comme matière (3) première, des matières organiques à hydrogéner et/ou à réformer et/ou à craquer ou des charbons et, comme réactif, de l'hydrogène ou des gaz ou des liquides contenant de l'hydrogène.

10. Procédé suivant l'une ou plusieurs revendications 1 à 6, **caractérisé en ce que** l'on utilise, comme matière (3) première, des produits minéraux et des terres et, comme agent d'extraction, du cyanure de potassium, du cyanure de sodium ou de la thiourée.

11. Procédé suivant l'une ou plusieurs revendications 1 à 6, **caractérisé en ce que** l'on utilise, comme matière (3) première, un substrat et, comme agent d'extraction, une solution d'enzymes.

12. Procédé suivant l'une ou plusieurs revendications 1 à 6, **caractérisé en ce que** l'on utilise, comme matière (3) première, des matières plastiques et, comme agent d'extraction, des solvants spécifiques solubles dans les matières plastiques.

13. Extrudeuse pour la mise en oeuvre d'un procédé suivant l'une ou plusieurs des revendications 1 à 12, comprenant une entrée (2) pour la matière (3) première, un fourreau (1) sensiblement cylindrique, ayant des éléments (10, 11) de filtration, une vis (5) montée tournante dans le fourreau (1) et destinée à transporter et à comprimer la matière (3) première, au moins un dispositif (15, 16) d'introduction des agents d'extraction et/ou des réactifs entre le fourreau (1) et la vis (5), au moins une ouverture (18) de sortie pour des substances extraites et/ou des produits de réaction, et une ouverture (6) de sortie pour la matière (3) première comprimée et extraite et/ou ayant réagi, au moins un étranglement (9) étant prévu sur la vis (5), **caractérisée en ce que**
• le fourreau (1) est formé en alternance d'au moins un segment (11) de filtration et d'au moins un segment (13) fermé, le segment (11) de filtration étant entouré d'une chambre (12) fermée de captage,
• le segment (13) fermé est disposé par rapport à la vis (5) avant un étranglement (9) ou entre deux étranglements (9) et forme une chambre (14) d'établissement d'une pression,
• la chambre (14) d'établissement d'une pression a une ouverture (17) et un dispositif (16) d'injection d'agents d'extraction et/ou de réactifs à l'état liquide et/ou surcritique,
• le segment (11 ) de filtration est disposé par rapport à la vis (5), respectivement, dans la partie d'un étranglement (9), et
• la chambre (12) de captage a une sortie (18) qui résiste à la pression pour les substances qui peuvent être extraites et/ou pour les produits de réaction.

14. Extrudeuse suivant la revendication 13, **caractérisée en ce que** l'extrudeuse a au moins deux segments (13) fermés séparés l'un de l'autre par un segment (11 ) de filtration.

15. Extrudeuse suivant la revendication 13 ou 14, **caractérisée en ce que** l'extrudeuse (5) est creuse et a, avant un étranglement (9) ou entre deux étranglements (9), au moins une ouverture (15) et un dispositif d'injection d'agents d'extraction et/ou de réactifs.

16. Extrudeuse suivant l'une ou plusieurs des revendications 13 à 15, **caractérisée en ce que** le segment (13) fermé a plusieurs ouvertures (17) et buses d'injection.

17. Extrudeuse suivant l'une ou plusieurs des revendications 13 à 16, **caractérisée en ce que** la chambre (12) de captage a plusieurs sorties (18).

18. Extrudeuse suivant l'une ou plusieurs des revendications 13 à 17, **caractérisée en ce que** la surface intérieure du segment (13) fermé et du segment (11) de filtration, ainsi que la surface extérieure de la vis (5), y compris l'étranglement (9), est habillée de matériaux résistant à l'abrasion et/ou résistant à la température comme du caoutchouc de duretés Shore différentes, de couches de métal, de couches d'oxyde métallique ou de couches de céramique.

19. Extrudeuse suivant l'une ou plusieurs des revendications 13 à 17, **caractérisée en ce que** la surface intérieure du segment (13) fermé et du segment (11) de filtration, ainsi que la surface extérieure de la vis (5), y compris l'étranglement (9), est revêtue d'un matériau formant catalyseur en lit fixe.

20. Utilisation de l'extrudeuse suivant l'une ou plusieurs des revendications 13 à 19 pour recueillir des huiles, des sucres, des protéines, des terpènes, des produits aromatiques et des arômes à partir de matières premières organiques.

21. Utilisation de l'extrudeuse suivant l'une ou plusieurs des revendications 13 à 19 pour la déshydratation de matières solides.

22. Utilisation de l'extrudeuse suivant l'une ou plusieurs des revendications 13 à 19 pour l'hydrogénation et/ou le réformage et/ou le craquage de substances organiques.

23. Utilisation de l'extrudeuse suivant l'une ou plusieurs des revendications 13 à 19 pour recueillir des métaux, notamment des métaux précieux, des oxydes métalliques et des composés de complexes métalliques à partir de produits minéraux de terre, etc.

24. Utilisation de l'extrudeuse suivant l'une ou plusieurs des revendications 13 à 19 pour recueillir des produits catalysés par voie enzymatique.

25. Utilisation de l'extrudeuse suivant l'une ou plusieurs des revendications 13 à 19 pour le fractionnement de matières plastiques.
